# EUROPEAN PATENT APPLICATION

(11) **EP 4 707 676 A1**
(43) Date of publication of application: **11.03.2026**
(21) Application number: 25194247.0
(22) Date of filing: 06.08.2025
(51) Int. Cl.: F23R 3/18, F23R 3/60

(54) **REHEAT ASSEMBLY FOR A GAS TURBINE ENGINE**

(30) Priority: 06.09.2024 GB 202413080
(71) Applicant: Rolls-Royce plc, London N1 9FX (GB)
(72) Inventor: Powell, Ashley J, Derby DE24 8BJ (GB); Romero, Eduardo, Derby DE24 8BJ (GB); Shaw, Lewis A, Derby DE24 8BJ (GB)
(74) Representative: Rolls-Royce plc

(57) **Abstract**

There is provided a reheat assembly 300, 300A for a gas turbine engine 10. The reheat assembly 300, 300A comprises a support duct 340 and a flameholder 370. The flameholder 370 comprises a flange portion 32 defining an inlet aperture 374 to an interior of the flameholder 370 and a boss 36 extending away from the flange portion 32 into the interior of the flameholder 370. The flameholder 370 is mounted to the support duct 340 by a fastener 38 extending through the support duct 340 into a hole 37 defined by the boss 36. The flameholder 370 is configured to receive a flow of air via the inlet aperture 374 to cool the boss 36.

## Description

### CROSS REFERENCE TO RELATED APPLICATIONS

This represents the first application directed towards the subject-matter.

### FIELD

This disclosure relates to a reheat assembly for a gas turbine engine, the reheat assembly comprising a flameholder. This disclosure further relates to: a gas turbine engine comprising such a reheat assembly, and an aircraft comprising such a gas turbine engine.

### BACKGROUND

Conventionally, a reheat assembly may be provided to a gas turbine engine for the purpose of providing increased thrust. A reheat assembly increases thrust by injecting fuel into a flow of air which has been exhausted from a core of the gas turbine engine. The fuel is dispersed within the flow of air and mixes with the flow of air to form a fuel-air mixture within the flow of air prior to being entrained into a wake of a flameholder. Within the wake of the flameholder, the fuel-air mixture is combusted in a flame. The heat released by the flame reheats the flow of air from the core of the gas turbine engine and provides the required additional thrust. Radiative heat released by the flame also results in heating of nearby upstream components, including the flameholder.

### SUMMARY

According to a first aspect there is provided a reheat assembly for a gas turbine engine, the reheat assembly comprising: a jetpipe casing comprising: a reheat core section configured to convey a core flow of air from a reheat core inlet to a reheat core outlet, and a reheat bypass section configured to convey a bypass flow of air from a reheat bypass inlet to a reheat bypass outlet radially outward of the core section, the reheat core section and the reheat bypass section being radially separated at the reheat core inlet and the reheat bypass inlet by a support duct; and a flameholder comprising: a flange portion defining an inlet aperture to an interior of the flameholder, and a boss extending away from the flange portion into the interior of the flameholder; wherein the flameholder is mounted to the support duct by a fastener extending through the support duct into a hole defined by the boss; and wherein the flameholder is configured to receive a flow of air from the reheat bypass section via the inlet aperture to cool the boss.

In an embodiment, the flameholder has an internal surface which defines an internal flow passageway extending from the inlet aperture and defining a flow direction for flow through the flameholder. In an embodiment, a minimum distance between a perimeter of the boss and the internal surface is at least 1.5 millimeters.

In an embodiment, an insert is received in the hole, and the fastener extends into the insert. In an embodiment, the insert is a wire insert. In an embodiment, the insert is formed from a material which includes silver. In an embodiment, the insert and the fastener are threadedly engaged. In an embodiment, wherein the hole is a blind hole.

In an embodiment, the boss is one of a plurality of bosses extending from the flange portion and the flameholder is mounted to the support duct by fasteners extending through the support duct into respective holes defined by the plurality of bosses. Each boss possesses all of the features of the boss in any of the preceding embodiments.

In an embodiment, the plurality of bosses are disposed around the inlet aperture.

In an embodiment, a height of the or each boss is greater than a thickness of the flange portion. In an embodiment, the height of the or each boss is at least 1.5 times the thickness of the flange portion, for example at least 2 times or at least 2.5 times the thickness of the flange portion. In an embodiment, the thickness is an average thickness of the flange portion. In an embodiment, the thickness is a minimum thickness of the flange portion.

According to a second aspect there is provided a gas turbine engine comprising: a reheat assembly in accordance with the first aspect; an engine core defining a core flow pathway; and an outer casing which defines a bypass duct around the engine core; wherein: the jetpipe casing is attached to the outer casing and the support duct is radially aligned with an outlet of the engine core so that: the reheat core inlet is aligned with an outlet of the core duct; and the reheat bypass inlet is aligned with an outlet of the bypass duct; the core flow pathway is configured to convey the core flow of air through the engine core to the reheat core inlet; and the bypass duct is configured to convey the bypass flow of air to the reheat bypass inlet.

In an embodiment, the bypass duct is configured to convey the bypass flow of air to the reheat bypass inlet without passing through the engine core.

According to a third aspect, there is provided an aircraft comprising a gas turbine engine in accordance with the second aspect.

### BRIEF DESCRIPTION OF THE DRAWINGS

Embodiments will now be described by way of example only with reference to the accompanying drawings, in which:
FIG. 1 is a simplified top view of an aircraft comprising an airframe and a propulsion machine;
FIG. 2 is a sectional side view of a gas turbine engine;
FIG. 3 is a sectional side view of a reheat assembly;
FIG. 4 is a rear view of the reheat assembly of FIG. 3;
FIG. 5 is a cut-through view of a first example flameholder suitable for use in the reheat assembly of FIG. 3;
FIG. 6 is another cut-through view of the first example flameholder of FIG. 5;
FIG. 7 is a cut-through view of a second example flameholder suitable for use in the reheat assembly of FIG. 3; and
FIG. 8 is another cut-through view of the second example flameholder of FIG. 7.

### DETAILED DESCRIPTION

### Aircraft

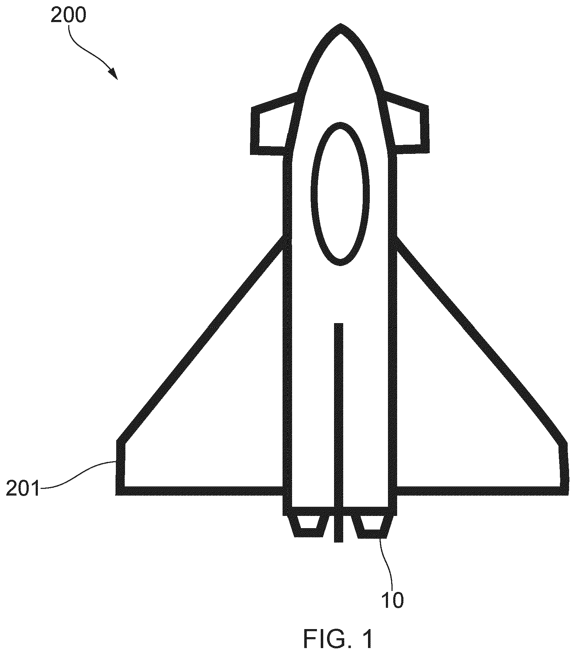

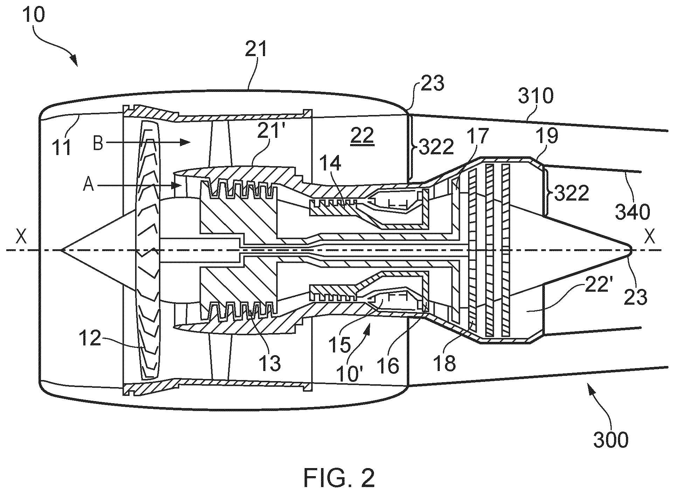

FIG. 1 shows a simplified and schematic view of an aircraft 200 comprising an airframe 201 and a gas turbine engine 10. The gas turbine engine 10 may be in accordance with the gas turbine engine 10 described below with reference to FIG. 2.

### Gas turbine engine

FIG. 2 shows a ducted fan gas turbine engine 10 having a principal and rotational axis X-X. The engine 10 generally comprises an air intake 11, a propulsive fan 12, and an engine core 10'. The engine core 10' comprises, in axial flow series, an intermediate pressure compressor 13, a high-pressure compressor 14, combustion equipment 15, a high-pressure turbine 16, an intermediate pressure turbine 17, and a low-pressure turbine 18. An outer casing 21 generally surrounds the engine 10 and defines the intake 11, a bypass duct 22 and a bypass duct outlet 23. An inner casing 21' defines a core duct 22', in which the engine core 10' is disposed, and further defines a core duct outlet 19.

During operation, air entering the intake 11 is accelerated by the fan 12 to produce two air flows: a core flow of air A into the engine core 10' and a bypass flow of air B which passes through the bypass duct 22 to provide propulsive thrust. The intermediate pressure compressor 13 compresses the core flow of air A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the core duct outlet 19 to provide additional propulsive thrust. The resultant hot combustion products are exhausted through the core duct outlet 19. The high, intermediate and low-pressure turbines respectively drive the high and intermediate pressure compressors 14, 13 and the fan 12 by suitable interconnecting shafts.

### Reheat assembly

The gas turbine engine 10 further comprises a reheat assembly 300. The reheat assembly 300 is generally configured to inject fuel into the core flow of air A downstream of the low-pressure turbine 18 and optionally to inject fuel into the bypass flow of air B for the purpose of combustion therein, causing the core flow of air A or the bypass flow of air B to be reheated, thereby providing additional propulsive thrust.

The reheat assembly 300 generally comprises a jetpipe casing 310 and a support duct 340. The support duct 340 extends axially from an upstream end of the jetpipe casing 310 (i.e., an end closest to the air intake 11), at least partially through the jetpipe casing 310 in a direction towards a downstream end of the jetpipe casing 310 (i.e., an end furthest from the air intake 11). The jetpipe casing 310 defines a reheat core section 320 configured to duct the core flow of air A from a reheat core inlet 322 to a reheat core outlet 324, and a reheat bypass section 330 configured to duct the bypass flow of air B from a reheat bypass inlet 332 to a reheat bypass outlet 334. The reheat bypass section 330 is annular and disposed radially outwardly from the reheat core section 320 such that the reheat bypass inlet 332 is disposed radially outward of the reheat core inlet 322, while the reheat bypass outlet 334 is also disposed radially outward of the reheat core outlet 324. The support duct 340 at least partially separates the reheat bypass section 330 from the reheat core section 320 at the upstream end of the jetpipe casing 310.

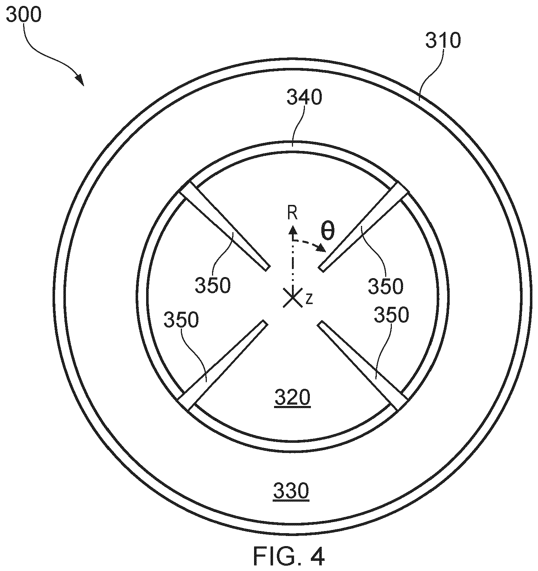

In this example, the gas turbine engine 10 comprises a plurality of reheat arrangements 350. Each reheat arrangement 350 is configured to enable the ignition of, and promote the stable formation of, a flame within the reheat assembly 300. In this example, the plurality of reheat arrangements 350 are circumferentially distributed around the jetpipe casing 310, as shown in FIG. 4 which shows a rear view of the reheat assembly 300. In other words, the plurality of reheat arrangements 350 are offset with respect to one another around a circumferential direction θ of the reheat assembly 300.

The plurality of reheat arrangements 350 are independently mounted to the jetpipe casing 310 so that they can be removed and replaced easily without requiring unnecessary removal and replacement of any other components. Although FIG.4 shows a total of four reheat arrangements 350 offset with respect to one another around the circumferential direction θ of the reheat assembly 300, it will be appreciated that there may be any suitable number of reheat arrangements, which may be offset with respect to one another around the circumferential direction θ of the reheat assembly 300 in this way. In other examples, there may be only a single reheat arrangement 350.

The jetpipe casing 310 defines an afterburning region in the downstream end of the jetpipe casing 310 (downstream of the reheat arrangements 350) in which a core flow of air A and a bypass flow of air B from the reheat core section 320 and the reheat bypass section 330 respectively are able to mix, and in which fuel injected into the air streams is ignited to provide additional thrust.

The jetpipe casing 310 of the reheat assembly 300 is radially aligned with, and attached to the outer casing 21 such that the reheat bypass inlet 332 of the reheat assembly 300 is aligned with the bypass duct outlet 23. The support duct 340 of the reheat assembly 300 is radially aligned with, and attached to the inner casing 21' such that the reheat core inlet 322 of the reheat assembly 300 is aligned with the core duct outlet 19.

Accordingly, the core duct 22' of the gas turbine engine 10 is configured to convey the core flow of air A through the engine core 10' to the reheat core inlet 322 and the bypass duct 22 of the gas turbine engine 10 is configured to convey the bypass flow of air B through the gas turbine engine 10 to the reheat bypass inlet 332, without passing through the engine core 10'.

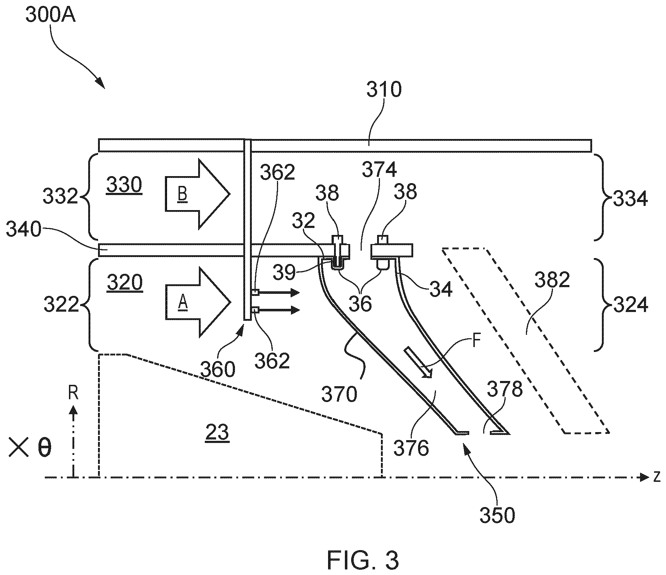

In addition, the reheat assembly 300 may have any suitable combination of features described below with reference to the example reheat assembly 300A shown in sectional side view by FIG. 3.

The reheat assembly 300A has an axial direction Z, a radial direction R and a circumferential direction θ. Because FIG. 3 is a sectional side view of the reheat assembly 300A, the circumferential direction θ is defined through the plane of the page, whereas the axial direction Z and the radial direction R are defined according to the direction of the corresponding coordinate arrows provided by FIG. 3. The reheat assembly 300A is configured such that, when the reheat assembly 300A is incorporated into a gas turbine engine, the axial direction Z of the reheat assembly 300A aligns with a principal and rotational axis of the gas turbine engine. The jetpipe casing 310 defines the axial direction Z, the radial direction R and the circumferential direction θ of the reheat assembly 300A.

As explained with reference to FIGs. 2 and 4, the reheat assembly 300A comprises a plurality of reheat arrangements 350, with only one being shown in the sectional side view of FIG. 3.

Each reheat arrangement 350 comprises a radially extending flameholder 370. The flameholder 370 is radially extending in that it extends along a direction having a component which is parallel to the radial direction R of the reheat assembly 300A. The flameholder is mounted to the support duct 340, as described in further detail below.

The radially extending flameholder 370 is configured to instigate and to maintain a relatively low-speed eddy within the core flow of air A to form a wake-stabilised region 382 located downstream of the flameholder 370.

The reheat arrangement 350 further comprises a plurality of fuel injection ports including a plurality of core fuel injection ports 362 (only two are shown for simplicity). Each core fuel injection port 362 is configured to discharge a flow of fuel into the reheat core section 320 for mixing with the core flow of air A.

Each core fuel injection port 362 is located upstream of the wake-stabilised region 382. In this example, the plurality of fuel injection ports 362 are disposed on a separate fuel injection pipe which is located upstream of the flameholder 370 and is separately mounted to the jetpipe casing 310. Further, in this example, the core fuel injection ports 362 are located in the same circumferential plane defined by the axial direction Z and the radial direction R as the flameholder 370, such that the core fuel injection ports 362 are substantially circumferentially aligned with the flameholder 370. In some examples, there may be only a single core fuel injection port 362.

In this example, the plurality of fuel injection ports 362 are offset with respect to one another along a radial direction R of the jetpipe casing 310. This ensures that each fuel injection port 362 injects fuel into the jetpipe casing 310 at a different radial location.

The provision of a plurality of core fuel injection ports offset with respect to each other along the radial direction R of the jetpipe casing 310 enables better control of thrust produced by igniting the fuel in the core flow of air A. Similarly, the provision of the plurality of bypass fuel injection ports offset with respect to each other along the radial direction R of the jetpipe casing 310 enables further improved control of thrust produced by igniting the fuel injected into the bypass flow of air B.

In this example, each of the plurality of fuel injection ports 362 is configured to discharge the respective flow of fuel in a direction within the plane perpendicular to the axial direction Z of the jetpipe casing 310. In other examples, the discharge of fuel may not be fully perpendicular to the axial direction, but may be in a direction having a component perpendicular to the axial direction Z of the jetpipe casing 310 (i.e., not parallel to the axial direction Z). Discharging fuel in such a direction improves the mixing of the fuel in the air flow in which it is discharged, by increasing atomisation of the fuel (i.e., creating smaller droplets of fuel) due to the increased difference in relative velocity between the fuel being discharged and the core flow of air A and the bypass flow of air B respectively (i.e., due to the increase in shear stress between the fuel and the air, which shears the fuel into smaller droplets). In yet further examples, the discharge of fuel may be in a direction parallel to the axial direction Z of the jetpipe casing 310.

The reheat arrangement 350 further comprises a fuel supply system 360 configured to supply the flow of fuel to each of the fuel injection ports 362. The fuel supply system 360 is usable to control fuel discharge from the fuel injection ports 362 so as to vary the amount of additional thrust provided by the reheat assembly 300A and to vary the likelihood of ignition of the fuel. For example, if only limited additional thrust is needed, fuel discharge can be staged by leaving only a single radially innermost core fuel injection port 362 open. If a maximum amount of additional thrust is required, the control valves may be controlled to open fully for all of the fuel injection ports 362. The fuel discharge can also be staged circumferentially in each flameholder 370, for example by discharging fuel from only a single flameholder 370 when limited additional thrust is needed, compared to discharging fuel from all of the flameholders 370 around the circumference.

The reheat assembly 300A may be provided with a pilot (not shown) configured to cause ignition of the fuel within the wake-stabilised region 382. In other examples, the fuel may auto-ignite within the wake-stabilised region 382 due to the high temperatures of the air therein without the need for a pilot to be provided.

In this example, the at least one core fuel injection port 362 is separate from the flameholder 370 and is located upstream of the flameholder 370 such that a suitable distance between the fuel injection ports 362 and the radially extending flameholder 370 may be selected to select a suitable distance between the fuel injection ports 362 and the wake-stabilised region 382 along the axial direction Z. The distance between the fuel injection ports 362 and the radially extending flameholder 370 along the axial direction Z may be selected so as to ensure that the fuel within the core flow of air A does not reach the autoignition temperature prior to entering the wake stabilised region 382.

### Flameholders

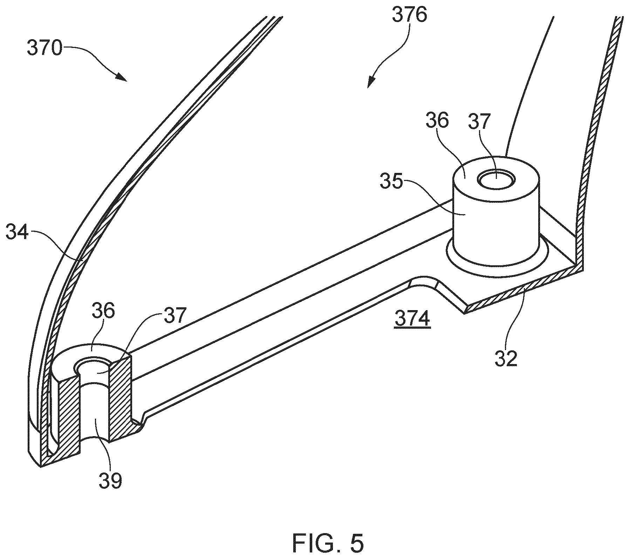

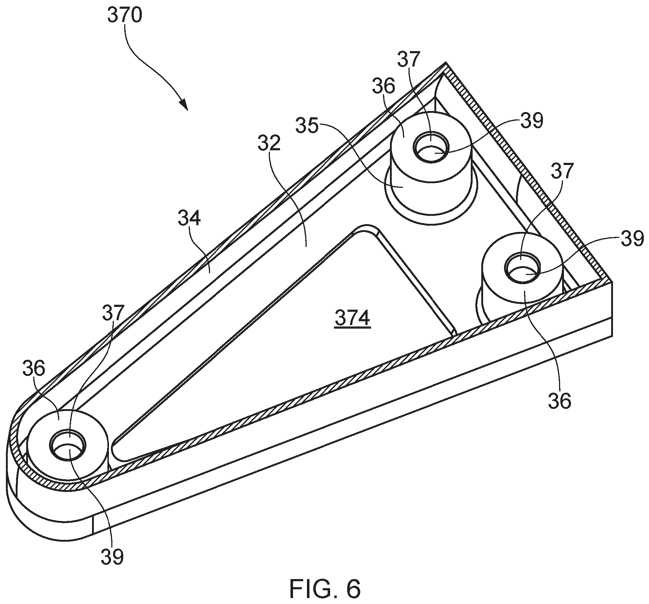

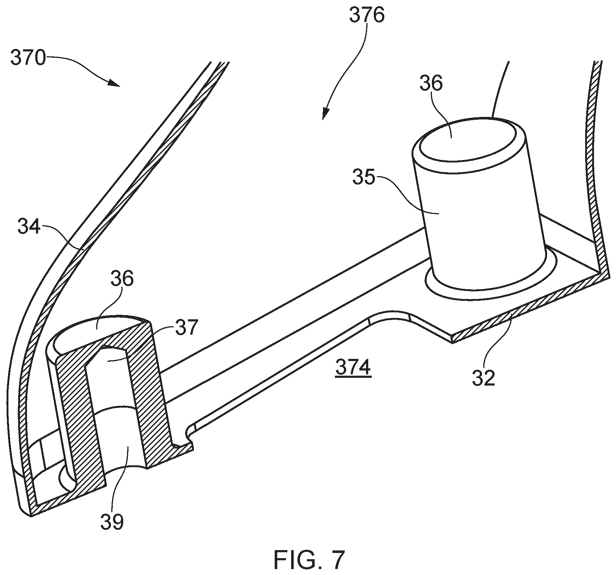

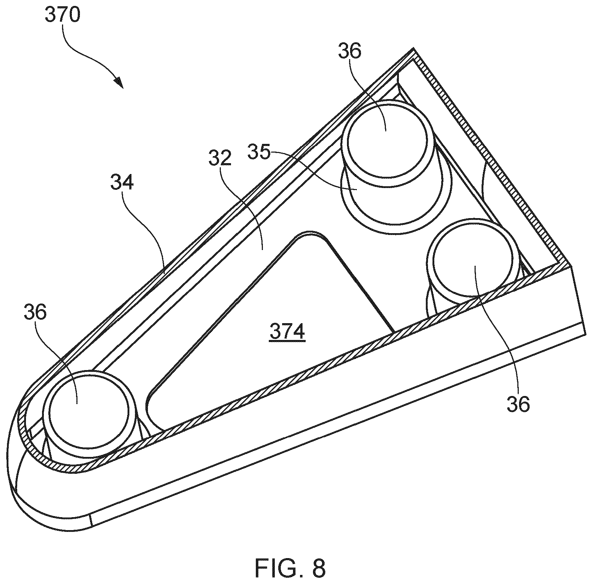

FIGs. 5 and 6 show respective cut-away views of a first example flameholder 370 suitable for use within, and forming part of, the reheat assembly 300A of FIG. 3. FIGs. 7 and 8 show respective cut-away views of a second example flameholder 370 suitable for use within, and forming part of, the reheat assembly 300A of FIG. 3. The following description is provided with particular reference to FIGs. 3 and 5 to 8. The second example flameholder 370 shown by FIGs. 7 and 8 is generally similar to the first example flameholder 370 shown by FIGs. 5 and 6, with like reference signs denoting similar or common features. Unless explicitly indicated otherwise, the following description applies to both the first and second example flameholders.

The flameholder 370 is in the form of a unibody produced by an additive layer manufacturing process such as powder bed fusion. The flameholder 370 comprises a flange portion 32 and an internal surface 34. The flange portion 32 is configured to facilitate attachment of the flameholder 370 to the support duct 340. Accordingly, the flange portion 32 has a shape which complements a shape of a local area of the support duct 340 to which the flameholder 370 is attached. The flange portion also defines an inlet aperture 374 configured to receive a cooling flow of air from the reheat bypass section 320. The flameholder 370 further defines an outlet aperture 378 which opens into the reheat core section 320.

The internal surface 34 defines an internal flow passageway 376 extending from the inlet aperture 374 to the outlet aperture 378. The internal flow passageway 376 is configured to convey the cooling flow of air from the inlet aperture 374 through an interior of the flameholder to the outlet aperture 378 for heat exchange between the flameholder 370 and the cooling flow of air. Once the cooling flow of air reaches the outlet aperture 378, it is discharged into the reheat core section 320. In this way, the internal flow passageway 376 defines a flow direction F for the cooling flow of air through the flameholder 370 and the inlet aperture 374 opens into the interior of the flameholder 270.

As best shown by FIG. 3, the flameholder 370 is inclined within the reheat core section 320 with respect to the core flow of air A. Namely, a part of a leading edge of the flameholder 370 adjacent to the inlet aperture 374 is more proximal to the reheat core inlet 322 than a part of the leading edge of the flameholder 370 adjacent to the outlet aperture 378. Likewise, a part of a trailing edge of the flameholder 370 adjacent to the inlet aperture 374 is more proximal to the reheat core inlet 322 than a part of the trailing edge of the flameholder 370 adjacent to the outlet aperture 378.

The flange portion 32 defines a plurality of radially extending bosses 36. Further, each boss extends away from the flange portion 32 of the flameholder 370 and into the interior of the flameholder 370. As best shown by FIGs. 5 and 6, fillets are provided where the bosses 36 meet the flange portion 32.

Each boss 36 defines a respective hole 37 therein. A perimeter 35 of each boss surrounds the hole 37 defined therein. In the example of FIGs. 3, 5 and 6, the perimeter 35 of each boss has a substantially circular profile. However, the perimeter 35 of each boss may have any suitable geometrical profile. The perimeter 35 of each boss is offset from the internal surface 34 such that a gap is provided therebetween, as best shown by FIG. 5. The gap corresponds to a minimum distance between the perimeter 35 of the relevant boss 36 and the internal surface 34.

A fastener 38 extends into each hole 37 through the support duct 340 and thereby mounts (e.g., attaches) the flameholder 370 to the support duct 340. The flameholder 370 is therefore mounted to the support duct 340 by a plurality of fasteners 38, each of which extends through the support duct 340 to mount the flameholder 370 to the support duct 340. The fasteners 38 each include a male threaded feature which enables the fastener 38 to threadedly engage the flameholder 370. In the example of FIG. 3, the fasteners 38 are bolts. Although the fasteners 38 of FIG. 3 are shown as having heads which extend above the support duct 340 and into the reheat bypass duct 330, it may be that the support duct 340 comprises a plurality of recesses, with each recess being configured to receive the heads of the fastener 38 (which may be a countersunk heads) such that no part of the fasteners 38 extend into the reheat bypass duct 300 when fully assembled.

A wire insert 39 is received within and partially fills each hole 37. The wire insert 39 provides a complementary female threaded feature which is configured to engage the male threaded feature of the corresponding fastener 38. In this way, each fastener 38 and each insert 39 are threadedly engaged. As shown by FIG. 3, each fastener 38 extends into the wire insert 39 disposed within the respective hole 37. The wire inserts 39 promote secure mounting of the flameholder 370 to the support duct 340 by providing improved engagement between the fasteners 38 and the bosses 36.

In a similar way to that described above in general with respect to the flameholder 370, the bosses 36 and holes 37 are each radially extending in that they extend along a direction having a component which is parallel to the radial direction R of the reheat assembly 300A. Because the fasteners 38 are received within and partially fill respective holes 37, the fasteners are also radially extending in this manner.

The material from which the inserts 39 are formed includes silver. For example, each insert 39 may include electrolytically deposited silver plating. This is associated with a lower risk of seizure of the fastener(s) 38 within the bosses(s) 36.

The inventors have found that flameholders 370 in accordance with the present disclosure exhibit relatively reduced temperatures in the material surrounding the holes 37 compared to previously-considered flameholders in which the holes for fasteners are defined by a block of material forming a flange portion of said previously-considered flameholders, the block of material being provided for the purpose of providing strength to at least the flange portion of the flameholder. In particular, the cooling flow of air received from the reheat bypass section 320 via the inlet aperture 374 is able to wash over and around the bosses 36 and thereby provide convective cooling thereto.

In reaching the conclusion outlined in the paragraph above, the inventors conducted simulation work using a computational fluid dynamic (CFD) model, a summary of the results of which are shown in Table 1 below. Namely, the inventors simulated the thermal state of a previously-considered flameholder (arrangement number 1 in Table 1 below) in which the holes for the fasteners were defined by a block of material forming a flange portion and a flameholder in accordance with the present invention (arrangement number 2 in Table 1 below) under exemplary conditions under which the flameholder is expected to be subjected to in use when incorporated within the reheat assembly 300A of FIG. 3. In particular, the inventors simulated the temperature of a face of the material forming the flameholder 370 configured to surround the wire inserts (e.g., when inserted).

**Table 1: simulated comparison of previously-consider flameholder arrangement and flameholder arrangement in accordance with the present disclosure**

| **Arrangement number** | **1** | **2** | **Difference** |
|---|---|---|---|
| Minimum temperature of the face (degrees Kelvin) | 941.9 | 715.2 | 226.7 |
| Maximum temperature of the face (degrees Kelvin) | 978.3 | 765.8 | 212.5 |
| Mean temperature of the face (degrees Kelvin) | 997.0 | 797.3 | 199.7 |

To promote convective cooling of the bosses 36 by the cooling flow of air received via the inlet aperture 374, the inventors have found that a gap between the perimeter 35 of each boss 36 and the internal surface 34 of at least 1.5 millimetres promotes particularly effective cooling of the bosses 36.

Similarly, the inventors have found that a height of the bosses 36 being relatively large compared to a thickness (e.g., an average thickness or a minimum thickness) of the flange portion 32 promotes cooling of the material surrounding the fasteners 38 (and inserts 39). The average thickness of the flange portion 32 may be a mean average thickness calculated around the inlet aperture 374. Therefore, the height of each boss 36 is greater than the thickness of the flange portion. In the example of FIGs. 3, 5 and 6, the height of each boss 36 is more than 2.5 times the thickness of the flange portion 32 to further promote cooling of the material surrounding the fasteners 38 (and inserts 39). However, it is anticipated that the height of each boss 36 may be, for example, 1.5 times the thickness of the flange portion 32. The height of each boss 36 may also be at least 1.5 times a diameter of the fastener(s) 38.

As best shown by FIGs. 5 and 6, the bosses 36 are disposed around (e.g., surround) the inlet aperture 374. As a result, in use, the cooling flow of air which enters the internal flow passageway 376 through the inlet aperture 374 may wash over and around each of the bosses 36 separately rather than, for example, being required to wash over and around multiple bosses within a single region of the flange portion 32. This provides more effective use of the cooling flow of air to cool the bosses 36 and thus the fasteners 38 (and the inserts 39).

The relative reduction in temperature of the material surrounding the wire inserts 39 compared to previously-considered flameholders reduces a likelihood of thermally-induced adverse changes to the wire inserts 39 and/or fasteners 38. For example, if the bulk (e.g., mean) temperature of the material surrounding the holes 37 exceeds 500 degrees Celsius (i.e., approximately 773 degrees Kelvin), the silver present within the material of the inserts 39 may begin to migrate out of the inserts 39 and into the fasteners 38 and/or bosses 36. Such changes may increase a likelihood of seizure of the fastener(s) 38 within the bosses(s) 36. As can be seen from Table 1 above, flameholders in accordance with the present invention may be expected exhibit a mean temperature of the material surrounding the holes 37 below 773 degrees Kelvin.

Flameholders 370 in accordance with the present disclosure are able to remain readily detachable from the support duct 340 after extended periods of use. This facilitates easier maintenance of a reheat assembly comprising one or more of such flameholders 370.

In the second example flameholder 370 shown by FIGs. 7 and 8 (but not in the first example flameholder 370 shown by FIGs. 5 and 6), the holes 37 are each blind holes 37 (i.e., the holes 37 do not extend through the respective boss 36 from one side to the other). The axial length of the holes 37 may therefore be selected so as to resist excessive overtightening of the fasteners 38 during installation and/or maintenance by limiting advancement of the fasteners 38 within the corresponding holes 37. Resisting excessive overtightening of the fasteners 38 reduces a risk of damage being caused to the bosses 36 during installation and/or maintenance as well as mitigating a risk of large stresses developing within the bosses 36, fasteners 38 and/or inserts 39 due to thermal expansion thereof during operation of the reheat assembly 300A. Such large stresses, which may be applied in cycles corresponding to selective operation of the reheat assembly 300A, can threaten the structural integrity of the respective components. Moreover, the holes 37 being blind holes may ensure that the fastener(s) 38 cannot be caused to unintentionally protrude/fall out of the hole(s) 37 during installation.

### Other

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein. The present disclosure is also relevant for land, aviation and marine applications in both civil and military contexts.

## Claims

1. A reheat assembly for a gas turbine engine, the reheat assembly comprising:
a jetpipe casing comprising:
a reheat core section configured to convey a core flow of air from a reheat core inlet to a reheat core outlet, and
a reheat bypass section configured to convey a bypass flow of air from a reheat bypass inlet to a reheat bypass outlet radially outward of the core section, the reheat core section and the reheat bypass section being radially separated at the reheat core inlet and the reheat bypass inlet by a support duct; and
a flameholder comprising:
a flange portion defining an inlet aperture to an interior of the flameholder, and
a boss extending away from the flange portion into the interior of the flameholder;
wherein the flameholder is mounted to the support duct by a fastener extending through the support duct into a hole defined by the boss; and
wherein the flameholder is configured to receive a flow of air from the reheat bypass section via the inlet aperture to cool the boss.

2. The reheat assembly of claim 1, wherein
the flameholder has an internal surface which defines an internal flow passageway extending from the inlet aperture and defining a flow direction for flow through the flameholder; and
a minimum distance between a perimeter of the boss and the internal surface is at least 1.5 millimetres.

3. The reheat assembly of claim 1 or claim 2, wherein an insert is received in the hole, and the fastener extends into the insert.

4. The reheat assembly of claim 3, wherein the insert is formed from a material which includes silver.

5. The reheat assembly of claim 3 or claim 4, wherein the insert and the fastener are threadedly engaged.

6. The reheat assembly of any preceding claim, wherein the hole is a blind hole.

7. The reheat assembly of any preceding claim, wherein the boss is one of a plurality of bosses extending from the flange portion, and the flameholder is mounted to the support duct by fasteners extending through the support duct into respective holes defined by the plurality of bosses.

8. The reheat assembly of claim 7, wherein the plurality of bosses are disposed around the inlet aperture.

9. The reheat assembly of claim 8, wherein a height of each boss is greater than a thickness of the flange portion.

10. A gas turbine engine comprising:
the reheat assembly of any preceding claim;
an engine core defining a core flow pathway; and
an outer casing which defines a bypass duct around the engine core; wherein:
the jetpipe casing is attached to the outer casing and the support duct is radially aligned with an outlet of the engine core so that:
the reheat core inlet is aligned with an outlet of the core duct; and
the reheat bypass inlet is aligned with an outlet of the bypass duct;
the core flow pathway is configured to convey the core flow of air through the engine core to the reheat core inlet; and
the bypass duct is configured to convey the bypass flow of air to the reheat bypass inlet.

11. An aircraft comprising the gas turbine engine of claim 10.
